# EUROPÄISCHE PATENTANMELDUNG

(11) **EP 4 450 576 A1**
(43) Veröffentlichungstag der Anmeldung: **23.10.2024**
(21) Anmeldenummer: 24175647.7
(22) Anmeldetag: 23.09.2022
(51) Int. Cl.: C09J 7/21, H01B 13/012, H02G 3/04

(54) **Klebeband zum Ummanteln von langgestrecktem Gut wie insbesondere Kabelsätzen und Verfahren zur Ummantelung**

(30) Priorität: 28.09.2021 DE 102021210866
(62) Teilanmeldung aus: 22786938.5
(71) Anmelder: TESA SE, 22848 Norderstedt (DE)
(72) Erfinder: SCHLOZ, Sabrina, 22848 Norderstedt (DE)
(74) Vertreter: tesa SE

(57) **Zusammenfassung**

Die Erfindung bezieht sich auf ein Klebeband, insbesondere zur Längsummantelung von langgetrecktem Gut wie Kabelsätzen in einem Automobil, umfassend einen Träger mit einer Oberseite und einer Unterseite, wobei der Träger bezogen auf die Querrichtung eine Breite B_{T} aufweist, und mindestens eine auf der Unterseite des Trägers aufgetragene Klebemassenschicht, wobei auf der Klebeschicht ein zweiter Träger vorhanden ist, der eine geringere Breite B_{Schutz} aufweist als die Breite B_{T} des ersten Trägers, der erste Träger mit der Klebeschicht beidseitig gegenüber den Seitenkanten des zweiten Trägers übersteht, wobei der erste Überstand eine Breite von Bstart und der zweite Überstand eine Breite von B_{Hülle} aufweisen, dadurch gekennzeichnet, dass der erste Träger ein Gewebe oder eine Maschenware wie beispielsweise ein Abstandsgestrick oder ein Abstandsgewirk ist und der zweite Träger ein textiler Träger gewählt aus der Gruppe Maschenware wie beispielsweise insbesondere ein Abstandsgestrick oder ein Abstandsgewirk, Doppelgewebe oder ein Vliesstoff, der nicht mit einem chemischen Bindemittel verfestigt ist, wie insbesondere ein Nadelvliesstoff, ist und der erste Träger ein Flächengewicht von über 200 g/m² bis 1200 g/m² und der zweite Träger ein Flächengewicht von 200 bis 1000 g/m² aufweist.

## Beschreibung

Die Erfindung bezieht sich auf ein Klebeband zum Ummanteln von langgestrecktem Gut wie insbesondere Kabelsätzen in Automobilen und Verfahren zur Ummantelung.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen.

Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1 und der EP 2 497 805 A1 bekannt. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt. Besonderer Schutz gegen eine Schlageinwirkung wird durch abriebfeste Gewebe mit zusätzlich aufgebrachten Beschichtungen erreicht.

Neben den klassischen Fahrzeugen mit Verbrennungsmotoren gewinnen Hybridelektrokraftfahrzeuge (englisch Hybrid Electric Vehicle, HEV) und Elektroautos mit Batterie (Battery Electric Vehicle, BEV) zunehmend an Bedeutung.

Ein Hybridelektrokraftfahrzeug ist ein Fahrzeug mit Hybridantrieb, also ein Elektrofahrzeug, das von mindestens einem Elektromotor sowie einem weiteren Energiewandler angetrieben wird und Energie sowohl aus seinem elektrischen Speicher (Akku) als auch einem zusätzlich mitgeführten Kraftstoff bezieht. Ein vollelektrisches Fahrzeug wird ausschließlich von einem batteriebetriebenen Elektromotor angetrieben und benötigt daher keinen fossilen Kraftstoff. Der Akku wird über externe Netzteile geladen.

In allen Kraftfahrzeugen steigt die Menge der elektrischen Leitungen durch vermehrten Einsatz elektrischer Komponenten, während gleichzeitig der Bauraum für den Leitungssatz besonders in Kleinkraftfahrzeugen zunehmend kleiner wird. Auch die Konstruktion von Elektrofahrzeugen und Hybridfahrzeugen erfordert mehr elektrische Leitungen. Die Verwendung von elektrischen Spannungen über 42 V erfordert einen zusätzlichen Schutz der Leitungen, der auch über den normalen Gebrauch des Fahrzeuges hinaus einen Schutz in speziellen Unfallsituationen sicherstellen muss.

Die DE 10 2011 086 191 A1 beschreibt einen Schutzschlauch insbesondere für Rohre, der als längsförmiges Bandmaterial dargereicht wird und durch Zusammenlegen der Längskanten zu einem Schlauch geformt wird. Der dauerhafte Verschluss des geformten Schlauches erfolgt durch Verschweißen, durch Verkleben oder durch die Verwendung eines Deckbands. Das Verschweißen stellt eine apparativ aufwändige Form des Verschlusses dar, dazu sind beide Lagen in einen engen Verbund zu bringen und zum Beispiel mit Ultraschall zu verschweißen. Bei längsförmig ausgedehnten Schutzschläuchen kann dies nicht an jeder Stelle sichergestellt werden. Die zweite Möglichkeit ist die Aufbringung eines Deckbandes entlang der überlappenden Längskanten. Die Kombination von zwei Lagen längsförmiges Bandmaterial kann der Kombination eine merkbare Steifigkeit verleihen, geformt zu einem Schutzschlauch neigt dieser zum Öffnen und stellt die Schutzfunktion nicht mehr zur Verfügung. Die Eigenschaften des Deckbandes für einen dauerhaften und sicheren Verschluss des Schutzschlauches werden in der Schrift nicht näher beschrieben.

Aramide sind aromatische Polyamide, also Polyamide, die im molekularen Aufbau einen Benzolring enthalten, der an den nach Nomenklatur als Meta oder Para bezeichneten Positionen Substituenten enthält.

Die als Meta-Aramide bezeichneten Fasern und Garne werden unter dem Handelsnamen Nomex angeboten und werden für spezielle Zwecke in der persönlichen Schutzausrüstung eingesetzt. Der gute Hitze- und Flammschutz kombiniert mit einem guten Tragekomfort eröffnet für diese Fasern und Garne den Einsatz bei Schutzkleidung für Feuerwehr und Luftfahrt. Technisch bekannt ist bei Meta-Aramiden, dass bis zu einer Temperatur von 175 °C kein nennenswerter Festigkeitsverlust zu verzeichnen ist und eine Beständigkeit gegen viele Chemikalien gegeben ist.

Die als Para-Aramide bezeichneten Fasern und Garne werden unter den Handelsnamen Kevlar oder Twaron angeboten. Textilien aus diesen Garnen zeigen gute Isoliereigenschaften gegen Hitze und Kälte und sind damit auch in verschiedenen Bereichen der persönlichen Schutzausrüstung im Einsatz. In Kombination mit anderen Polymeren kann Para-Aramid für schusshemmende Zwecke eingesetzt werden.

Bei der Herstellung der textilen Flächen werden beide Formen der Aramide meistens in Kombination mit anderen Garntypen eingesetzt und verwendet. In der Automobilindustrie sind solche Textilien gelegentlich in Form von rundgewirkten oder geflochtenen Schläuchen im Einsatz, die eine zusätzliche vollflächige Beschichtung im gesamten Umfang aufweisen.

Eine selbstschließende abriebfeste Schutzhülle beschreibt EP 1 692 332 A1, wobei ein gewirktes bandförmiges Textil in rund gebogener Form thermofixiert wird. Somit kann der Schutzschlauch entlang seiner Längsachse geöffnet werden und die Kabel aufnehmen. In linearer ungebogener Ausdehnung werden die Kabel umhüllt und geschützt. Bei unregelmäßig, gebogenen Einbauformen im Automobil kann es in Abhängigkeit des Biegeradius zum unerwünschten Öffnen kommen. Diese Lösung erfordert hinsichtlich der diversen Durchmesser am Leitungssatz eine Vielzahl von individuell hergestellten Durchmesservarianten. Die Auswahl verschiedener Polymermaterialien der Kettgarne und der Schussgarne kann zu entsprechenden Schutzeigenschaften führen.

Das Öffnen einer wickelbaren röhrenförmigen Schutzhülle kann durch eine Vorrichtung, wie sie in der EP 2 504 899 A1 beschrieben ist, verbessert werden. Ein zusätzlich an der Außenhülle angebrachte Schließvorrichtung in Form einer Haken-Schlaufen-Verbindung eines Bandes zum Verknoten oder eines fest verbundenen Kabelbinders sichert die Umhüllung gegen unerwünschtes Öffnen. Die Verwendung unterschiedlicher Materialien für Umhüllung und Verschluss gestalten diese Lösung sehr aufwändig in der Herstellung, auch die Anwendung dieser Umhüllungen erfordern besondere Aufmerksamkeit und erhöhten Zeitaufwand bei der Herstellung der Leitungssätze.

Die EP 2 606 168 A1 beschreibt eine selbstwickelnde Gewebehülle, wobei in Schussrichtung abwechselnde Bereiche A und B konstruiert sind, die Monofilamentgarn beziehungsweise Multifilamentgarn enthalten. Die Wärmebehandlung führt zu einer selbstverschließenden röhrenförmigen Ausführung. Die abwechselnden Bereiche A und B scheinen durch die Verwendung verschiedener Garne aber nicht die gleiche Schutzfunktion zur Verfügung zu stellen. Somit kann diese Lösung keinen gleichmäßigen Schutz an jeder Leitungssatzposition herstellen.

In der Leitungssatzherstellung sind weiterhin vorgefertigte Schläuche bekannt, die individuell für jeden erforderlichen Kabelsatzdurchmesser hergestellt werden. Es können je nach Anwendungsgebiet verschiedene Garnmaterialien eingesetzt werden, die in Flechtmaschinen oder Strickmaschinen zu schlauchförmigen Produkten verarbeitet werden. Häufig werden solche Materialien in einem weiteren Verarbeitungsschritt mit Imprägnierungen oder funktionalen Beschichtungen versehen. Eine Imprägnierung kann beispielsweise eine versteifende Wirkung erzielen oder eine Silikonbeschichtung eine wasser- oder ölabweisende Eigenschaft erzeugen. Bekannt sind beispielsweise Glasseidenschläuche mit einer Silikonkautschukbeschichtung. In allen Fällen werden solche Schlauchlösungen planmäßig vor der Montage der Steckverbindungen auf das Kabelbündel aufgezogen (mit Stecker passen die Kabel nicht mehr durch den Schlauch), damit es zu einer möglichst eng anliegenden Umhüllung kommt. Diese ist aber oftmals nicht möglich, so dass im Schlauch Freiräume vorhanden sind. Derartige Aufbauten brauchen dann mehr Einbauraum im Automobil. Eine nachträgliche Montage am Leitungssatz ist mit solchen Lösungen schwer bis gar nicht zu erreichen.

In besonderer Weise sind die Hochvoltkomponenten in Elektrofahrzeugen und Hybridfahrzeugen zu schützen. Die DE 10 2018 207 694 A1 schlägt textile Schutzhüllen für Hochvoltkomponenten vor, die in Form eines Schrumpfschlauches zu eng anliegenden Schutzhüllen angewendet werden können. Neben den elektronischen Hochvoltbauteilen sind auch die verbindenden Leitungen zwischen diesen Komponenten schutzbedürftig. Dieser durch Wärme aktivierte Schrumpfschlauch kann nicht ohne Gefahr für Kabelisolierung am Leitungssatz angewendet werden.

Zur Verbesserung der Dämpfung und Erhöhung der Abriebfestigkeit sind Klebebänder bekannt, deren Träger aus mehreren Schichten bestehen.

Die EP 1 722 968 A1 offenbart ein hoch abriebfestes Band für die Bandagierung von Kabelbäumen, insbesondere in Automobilen, aus einem Träger mit einer ersten Deckschicht A und einer zweiten Deckschicht B, wobei sich zwischen den Deckschichten A und B eine Zwischenschicht C befindet, die mit den Deckschichten A und B jeweils über deren gesamte Fläche fest verbunden ist. Die Deckschichten A und B bestehen aus einem Gewebe oder Gewirke, die Zwischenschicht C aus einer viskoelastischen Klebemasse, bevorzugt Selbstklebemasse, oder einem beidseitig klebend ausgerüsteten Klebeband.

Mit der EP 1 723 210 A1 ist ein hoch abriebfestes und geräuschdämpfendes Band für die Bandagierung von Kabelbäumen bekannt geworden, das aus einem Träger mit einer ersten Deckschicht A besteht, die mit einer zweiten Schicht C über die gesamte Fläche der Deckschicht A fest verbunden ist.

Die Deckschicht A kann Velours, Gelege, Gewebe oder Gewirke sein, die Schicht C ein poröses Flächengebilde wie ein Textil mit einer offenen, aber stabilen dreidimensionalen Struktur, wie ein Schaumstoff oder wie eine geschäumte Folie.

Beide Deckschichten weisen die gleiche Breite auf und sind dabei jeweils über deren gesamte Fläche mittels einer weiteren Klebstoffschicht ohne Versatz miteinander verbunden, so dass deren Seitenkanten bündig abschließen.

So beschreibt die EP 1 911 824 A1 ein Kabelwickelband mit einem bandförmigen, als Verbund aus einem Gewebe und aus einem Vlies ausgebildeten Träger, der zumindest einseitig vollflächig mit einer selbstklebenden Haftklebeschicht ausgerüstet ist. Das Gewebe weist mindestens 20 Kettfäden je cm und höchstens 22 Schussfäden je cm auf. Beide textile Lagen weisen auch hier die gleiche Breite auf und sind dabei jeweils über deren gesamte Fläche mittels einer weiteren Klebstoffschicht ohne Versatz miteinander verbunden, so dass deren Seitenkanten bündig abschließen.

Aufgrund der Zweilagigkeit ist das Klebeband in der Lage, sowohl an einem Dorn mit 5 mm Durchmesser als auch an einem Dorn mit 10 mm Durchmesser die Abriebklasse E gemäß LV 312 zu erfüllen. Einen Kabelbaum umschließt das Klebeband in einer schraubenlinienförmigen Wicklung.

Aus den zwei vollflächig laminierten Materialien, wie sie in der EP 1 723 210 A1 und der EP 1 911 824 A1 beschrieben sind, ergibt sich allerdings eine höhere Steifigkeit, die sich bei Spiralwicklung nachteilig auswirkt und die insbesondere zum Flagging an den Bandenden führt.

Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes.

Durch die vollflächige Ausrüstung des Trägers mit einer Klebebeschichtung kann ein Kontakt der Klebmasse mit der Kabelummantelung nicht vermieden werden.

Dies führt zu einer hohen Steifigkeit des Kabelbaums, da das Band an jeder Stelle durch die Klebmasse mit dem Kabelbaum verbunden ist.

Beim schraubenlinienförmigen Ummanteln eines Kabelbaums mit dem Klebeband überlappen sich die einzelnen Wicklungen, so dass an diesen Stellen vier textile Lagen übereinander liegen, was ebenfalls zu einem sehr steifen Kabelbaum führt. Allein aufgrund der Dicke des resultierenden Kabelbaums ist bei den engen Einbauverhältnissen, die heute im Automobilbau vorherrschen, die Gefahr nicht auszuschließen, dass das Klebeband an scharfen Kanten verletzt wird, so dass die Kabelbündelung aufgerissen wird.

Die EP 2 034 576 A1 beschreibt ein Klebeband aus einem Träger und einer darauf aufgebrachten Klebemasse, das eine weitgehend klebfreie Innenfläche aufweist, indem auf die Klebeschicht ein zweiter Träger auflaminiert ist, der eine geringere Breite aufweist als die Breite des ersten Trägers.

Es sind verschiedene Ausführungsformen vorgesehen. So kann der zweite Träger an einer Seitenkante bündig mit einer Seitenkante des ersten Trägers verlaufen, wobei der erste Träger mit der Klebeschicht gegenüber der anderen Seitenkante des zweiten Trägers übersteht. Der erste Träger kann mit der Klebeschicht auch beidseitig gegenüber den Seitenkanten des zweiten Trägers überstehen oder es kann vorgesehen sein, dass der erste Träger mit der Klebeschicht einseitig gegenüber einer Seitenkante des zweiten Trägers übersteht und der zweite Träger auf der anderen Seite des ersten Trägers einseitig gegenüber einer Seitenkante des ersten Trägers übersteht. Des Weiteren ist es auch möglich, das der zweite Träger mindestens aus zwei voneinander getrennten Trägerteilen besteht, wobei das erste Trägerteil eine erste Breite und das zweite Trägerteil eine zweite Breite aufweist, wobei die Summe der Breiten der Trägerteile kleiner ist als die Breite des ersten Trägers.

Die Umwicklung eines Kabelbaums mit dem beschriebenen Klebeband erfolgt dabei nicht - wie üblich - schraubenlinienförmig, sondern derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum. Im Folgenden wird diese Art der Wicklung "Einschlagen des Kabelbaums" genannt.

Würde schraubenlinienförmig eingesetzt, besteht die Möglichkeit, dass die Klebmasse mit der Kabelummantelung in Kontakt kommt, was wieder zu den oben geschilderten Nachteilen führt.

Die Prüfung und Klassifizierung von Klebebändern für die Kabelummantelung erfolgt in der Automobilindustrie nach umfangreichen Normenwerken wie zum Beispiel der VW 60360-3 "Schutzsysteme für Leitungssätze in Kraftfahrzeugen, Prüfanforderungen für Schläuche" (2019-05), der BMW GS 95008-3-1 "Schutzsysteme für Leitungssätze in Kraftfahrzeugen, Klebebänder, Anforderungen, Prüfungen" oder der ES-KU5T-1A303-AA rev. E (2017/06) "Harness Tape Performance Specification". Im Folgenden werden diese Normen verkürzt mit VW- , BMW- beziehungsweise Ford-Spezifikation bezeichnet.

Die Abriebbeständigkeit eines Klebebandes und Schutzschlauches wird nach BMW und VW ebenfalls anhand eines definierten Prüfverfahrens bestimmt. Die Klassifizierung der Klebebänder und Schläuche hinsichtlich ihrer Abriebbeständigkeit wird bei einem Dorndurchmesser von 5 mm in der Tabelle 1 (Klassifizierung Abriebbeständigkeit Klebbänder nach BMW GS 95008-3-1) wiedergegeben, Klebebänder und Schläuche werden nach gleichen Abriebklassen eingeordnet, wobei Schläuche zusätzlich bei erhöhter Umgebungstemperatur prüft werden können (siehe Tabelle 2: Klassifizierung Abriebbeständigkeit Schläuche nach VW 60360-3)

**Tabelle 1: Klassifizierung Abriebbeständigkeit Klebbänder nach BMW GS 95008-3-1**

| **Abriebklasse (bei RT)** | **Anforderung** |
|---|---|
| A kein Abriebschutz | < 100 Hübe |
| B geringer Abriebschutz | 100 bis 499 Hübe |
| C mittlerer Abriebschutz | 500 bis 999 Hübe |
| D hoher Abriebschutz | 1000 bis 4999 Hübe |
| E sehr hoher Abriebschutz | 5000 bis 14999 Hübe |
| F extrem hoher Abriebschutz | 15000 bis 29999 Hübe |
| G Abriebschutz für Sonderanwendungen | ≥ 30000 Hübe |

**Tabelle 2: Klassifizierung Abriebbeständigkeit Schläuche nach VW 60360-3**

| **Abriebklasse** | | | | **Anforderung** |
|---|---|---|---|---|
| Bei RT | Bei 40 °C | Bei 90 °C | | |
| A | AT40 | AT90 | kein Abriebschutz | < 100 Hübe |
| B | BT40 | BT90 | geringer Abriebschutz | 100 bis 499 Hübe |
| C | CT40 | CT90 | mittlerer Abriebschutz | 500 bis 999 Hübe |
| D | DT40 | DT90 | hoher Abriebschutz | 1000 bis 4999 Hübe |
| E | ET40 | ET90 | sehr hoher Abriebschutz | 5000 bis 14999 Hübe |
| F | FT40 | FT90 | extrem hoher Abriebschutz | 15000 bis 29999 Hübe |
| G | GT40 | GT90 | Abriebschutz für Sonderanwendungen | ≥ 30000 Hübe |

Der Prüfling mit einer Länge von 10 cm wird auf einen 5 mm dicken Stahldorn einlagig in Längsrichtung des zu prüfenden Produktes aufgelegt, bei nicht vollflächig gleichartigem Klebbandaufbau wird der Teil auf Abrieb getestet, der die Schutzfunktion in der Anwendung darstellt. Als Abriebwerkzeug dient ein Stahldraht mit 0,45 mm Durchmesser, der unter einer Gewichtsbelastung von 7 N mittig über den Prüfling reibt. Als Maßzahl für die Abriebeigenschaften wird die Anzahl der Doppelhübe bestimmt, bis der Prüfling zerstört ist. Durch die Messung der Abriebfestigkeit kann die Beständigkeit gegenüber schärferen Gegenständen wie zum Beispiel einer Metallkante in der Anwendung simuliert werden.

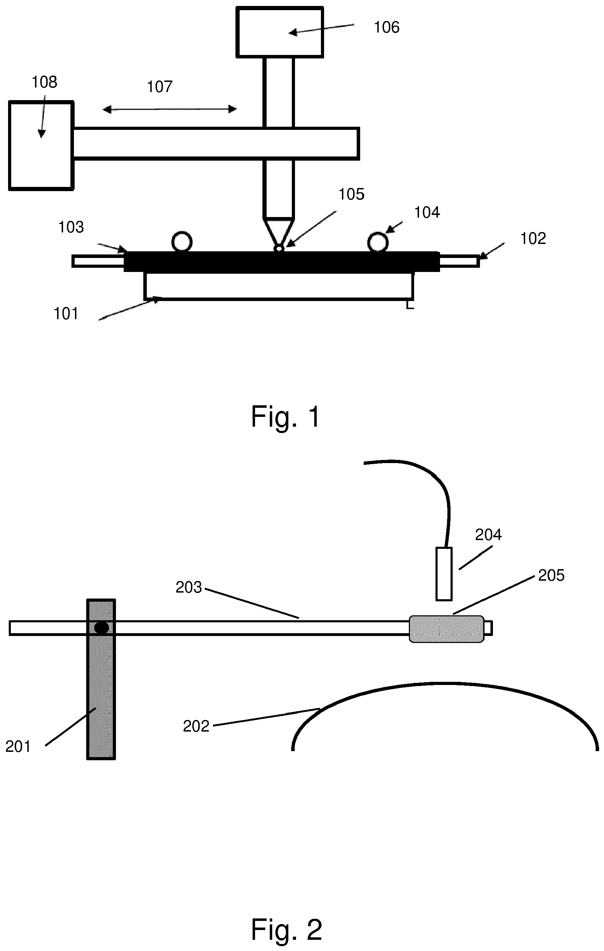

Das Verfahren der Abriebmessung ist in der Figur 1 gezeigt.

Die Geräuschdämpfung eines Schutzschlauches oder Klebebandes wird anhand eines definierten Prüfaufbaus und Prüfverfahrens nach BMW-, Ford- beziehungsweise VW-Spezifikation bestimmt.

Bei der VW-Spezifikation wird ein Stahlstab, einseitig drehbar gelagert, trifft auf ein gebogen aufgestelltes Aluminiumblech und erzeugt dabei ein Geräusch. Der Unterschied im Geräuschereignis zwischen den Stahlstab und dem mit Schutzhülle bewickeltem Stahlstab beschreibt den Grad der Geräuschdämpfung, die ein Schutzschlauch oder Klebeband erreichen kann.

Im Folgenden wird in Verbindung mit der Figur 2 das Messverfahren zur Geräuschdämpfung nach der Norm BMW und Ford ausführlich dargelegt.

Bei dieser Messmethode wird ein definierter Stahlstab 203 (Durchmesser 8 mm, Hebellänge von 220 mm) mit einem Prüfling 205 - sprich Klebeband - versehen und mit einer Kraft von 0,16 N aus einer Höhe von 20 mm, ausgelöst aus der Arretierung 205, auf ein Aluminiumblech 204 fallen gelassen. Das Aluminiumblech hat im unverformten Zustand die Masse 350 x 190 x 0,3 [mm] und wird halbtonnenförmig unter dem Prüfling 205 angeordnet, so dass sich eine Weite von 290 mm ergibt. Das entstehende Geräusch wird mit einem sich 50 mm über der Aufschlagstelle befindlichen Mikrophon 204 und eines handelsüblichen Schallmessgerät, beispielsweise Typ 2239 der Firma Bruel & Kjaer, in Form des Schalldruckpegels (Lsp) mit der Frequenzbewertung A (Frequenzbereich von beispielsweise 20 bis 12.500 Hz) und der Zeitbewertung S (Slow) erfasst.

Die Dämpfung wird als Differenz zwischen Nullwert mit nicht-umwickeltem Stahlstab sowie dem jeweiligen Messwert des Prüflings in dB(A) angegeben.

**Tabelle 3: Klassifizierung Geräuschdämpfung nach diversen Spezifikationen**

| **Messwert der Geräuschdämpfung** | **Geräuschdämpfungsklasse nach BMW- und VW-Spezifikation** | **Geräuschdämpfungsklasse nach Ford-Spezifikation** |
|---|---|---|
| 0 bis ≤ 2 dB(A) | A keine Geräuschdämpfung | 0 |
| > 2 bis ≤ 5 dB(A) | B geringe Geräuschdämpfung | 1 |
| > 5 bis ≤ 10 dB(A) | C mittlere Geräuschdämpfung | 2 |
| > 10 bis ≤ 15 dB(A) | D hohe Geräuschdämpfung | 3 |
| > 15 dB(A) | E sehr hohe Geräuschdämpfung | 4 |

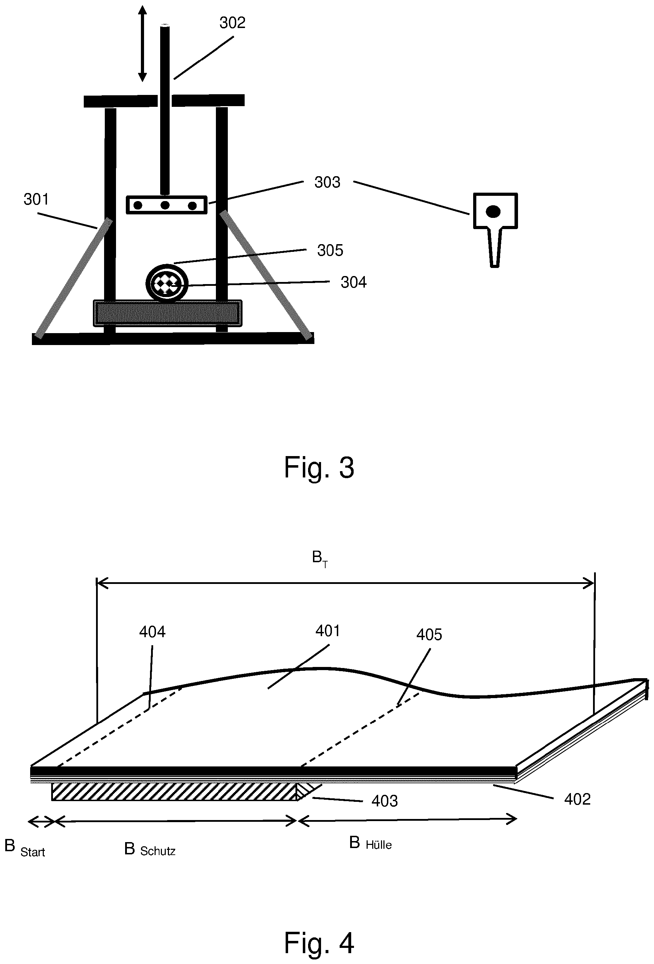

Die Prüfung von Klebebändern und Schutzschläuchen hinsichtlich erhöhter mechanischer Anforderungen wird in Norm VW 60360-3 als Fallturmtest beschrieben. In der Figur 3 ist der Fallturmtest gezeigt. Die Prüfvorrichtung besteht aus einer Grundplatte mit einem darüber montierten Fallturm, der ein Fallwerkzeug bestimmter geometrischer Form auf den Prüfkörper leiten kann. Der Fallkörper mit einer Gesamtmasse von 10 kg fällt weitgehend reibungsfrei auf den Prüfkörper, die Fallgeschwindigkeit vor dem Aufprall bestimmt Fallenergie des Prüfkörpers. Als Prüfkörper sind geschirmte und ungeschirmte Leitungen mit einem Durchmesser von 16 bis 35 mm² zu verwenden, die mit dem zu prüfenden Schutzsystem versehen werden. Am Innenleiter, der Schirmung und dem Fallwerkzeug wird eine Prüfspannung angelegt, um während der Prüfung elektrische Kontakte zu detektieren. Der elektrische Kontakt zeigt die Beschädigung des Prüfkabels an, der bei der verwendeten Prüfenergie auftritt.

Die maximal erreichbare Fallenergie ohne messbare Schädigung des Prüfkabels bestimmt die Klassifizierung der Schutzumhüllung nach Tabelle 4:

**Tabelle 4: Klassifizierung Energieklassen nach VW 60360-3**

| **Falltestklasse** / **Klassifizierung** | **Fallenergieklasse Fallwerkzeug 1** | **Fallenergieklasse Fallwerkzeug 2** |
|---|---|---|
| A | 5 J ± 10% | 5 J ± 10% |
| B | 10 J ± 10% | 10 J ± 10% |
| C | 15 J ± 10% | 15 J ± 10% |
| D | 25 J ± 10% | 25 J ± 10% |
| E | 50 J ± 10% | 50 J ± 10% |
| F | 75 J ± 10% | 75 J ± 10% |
| G | >75 J | >75 J |

Die Prüfung der Alterungseigenschaften soll das Verhalten der Bündelung durch die Klebebandlösung über die gesamte Fahrzeugnutzungsdauer simulieren und sicherstellen.

Die BMW-Norm beschreibt die Herstellung von Prüfmustern unter der Verwendung von Leitungen aus den verschiedenen Temperaturklassen, die im Fahrzeug definiert sind. So sind für die Dauergebrauchstemperaturen von 105 °C, 125 °C und 150 °C Referenzleitungen beschrieben, die für die Prüfung in dieser Temperaturklasse zu verwenden sind. Mit dem zu prüfenden Klebeband / Längsbandagierung werden Prüfmuster der Länge 500 mm und einer Bündelung der Länge 400 mm hergestellt. Der Durchmesser der Prüfmuster ist bei Verwendung von Längsbandagierungen an die vorliegende Breite des Klebebandes anzupassen.

Die Prüfmuster werden in U-Form gebogen bei der maximalen Dauergebrauchstemperatur und zusätzlich bei den geringeren Temperaturklassen für eine Zeit von 3000 h im Ofen mit natürlicher Belüftung gelagert. Alle 500 Stunden wird ein Prüfmuster entnommen und auf vorhandene Eigenschaften geprüft. Das Prüfmuster soll keine Risse, Anschmelzungen und andere sichtbare Schäden aufweisen und eine sichere Bündelung der Kabel gewährleisten. Ein Biegetest des Prüfmusters um einen Dorn, der den 4-fachen Durchmesser des Prüfmusters aufzeigt, darf nicht zum Reißen oder Aufplatzen der Bündelung führen.

Neben der Langzeitalterungsprüfung kann wird eine Kurzzeitalterungsprüfung beschrieben, die bei erhöhter Temperaturlagerung die zuvor beschriebene Langzeitalterung simulieren kann. Es werden auf inerten, temperaturstabilen Leitungen Prüfmuster mit dem zu prüfenden Klebeband / Längsbandagierung hergestellt, die eine Gesamtlänge von 500 mm und eine Prüflänge von 400 mm aufzeigen. Die Temperaturlagerung erfolgt im Ofen bei natürlicher Belüftung bei einer Temperatur, die 25 °C über der zu prüfenden Temperaturklasse liegt. Nach einer Lagerungszeit von 240 Stunden werden die Prüfmuster entnommen und auf vorhandene Eigenschaften geprüft. Das Prüfmuster soll keine Risse, Anschmelzungen und andere sichtbare Schäden aufweisen und eine sichere Bündelung der Kabel gewährleisten. Ein Biegetest des Prüfmusters um einen Dorn, der den 4-fachen Durchmesser des Prüfmusters aufzeigt, darf nicht zum Reißen oder Aufplatzen der Bündelung führen.

Die Ford-Norm beschreibt ein Langzeittemperaturlagerung unter Verweis auf die Norm SAE J2192. Die Temperaturlagerung erfolgt über einen Zeitraum von 3000 Stunden in der Temperaturklasse, die für das Klebeband / die Längsbandagierung erreicht werden soll. Die Prüfmuster verwenden Kabel der gleichen oder einer höheren Temperaturklasse, die auf einer Mindestlänge von 300 mm mit die zu prüfenden Material umhüllt werden. Bei Längsbandagierungen ist Anzahl der Leitungen im Prüfmuster an die Breite der Längsbandagierung anzupassen. Die Prüfmuster werden für den Zeitraum vom 3000 Stunden in einem Ofen mit natürlicher Belüftung hängend eingelagert.

Alle 500 Stunden wird ein Prüfmuster entnommen und auf vorhandene Eigenschaften geprüft. Das Prüfmuster soll keine Risse, Anschmelzungen und andere sichtbare Schäden aufweisen und eine sichere Bündelung der Kabel gewährleisten. Ein Biegetest des Prüfmusters um einen Dorn darf nicht zum Reißen oder Aufplatzen der Bündelung führen. Die Prüfintervalle bei 500 bis 1500 Stunden werden um einen Dorn mit vierfachen Prüfmusterdurchmesser und Prüfintervalle von 2000 bis 3000 Stunden um einen Dorn mit dem zehnfachen Prüfmusterdurchmesser gebogen.

Die Messung der Weichheit ist ein wesentliches Qualitätsmerkmal von Textilien, Leder, Papier und Kunststoffen mit biegeschlaffen Eigenschaften. Die Prüfung der Biegekraft nach dem Softometerverfahren dient dazu, unter festgelegten Bedingungen die Weichheit beziehungsweise Steifigkeit der flächenartigen Werkstoffe vergleichbar zu bestimmen.

Für die Bestimmung der Biegekraft an einer textilen Fläche wird ein Musterstück der Größe 75 x 50 mm ausgestanzt. Ein drehbar gelagerter Probenhalter aus zwei parallelen Platten fixiert die ausgestanzte Probe auf einer Fläche von 50 x 50 mm. Der Probenhalter mit der Probe wird gegen einen Kraftmessfühler geschwenkt, so dass der nicht eingespannte Teil der Probe mit der Länge von 15 mm um 30° gebogen wird. Die in dieser Position benötigte Biegekraft wird nach 10 s Messzeit als Biegekraft in der Einheit mN gemessen.

Zur Beschreibung der textilen Eigenschaften kann eine Probe in Längs- und Querrichtung und wenn die Anwendung dies erfordert auch in einer diagonalen Richtung zur Messung ausgestanzt werden. Dabei beschreibt die Ausdehnung in Richtung der 75 mm langen Probenseite auch die Biegerichtung, die beurteilt werden soll.

Aufgabe der Erfindung ist es, gegenüber dem Stand der Technik eine merkliche Verbesserung zu erzielen und ein Klebeband bereitzustellen, das in Form einer Längsbandagierung einen besonders hohen Schutz von Leitungssätzen bereitstellt. Diese Schutzfunktion gegen scheuernde, reibende und schlagförmig auftretenden Einflüsse soll in besonderer Weise die Hochvoltbereiche am Leitungssatz schützen. Das Klebeband soll zwei sich widerstrebende Eigenschaften perfekt verwirklichen, zum einen hohen mechanischen Schutz gegen Kerbwirkung bieten, zum anderen trotz der damit verbundenen Steifheit auch um dünnes Gut wickelbar zu sein.

Gelöst wird diese Aufgabe durch ein Klebeband, wie es im Hauptanspruch niedergelegt ist. Gegenstand der Unteransprüche sind dabei vorteilhafte Weiterbildungen des Klebebands und Verfahren zur Anwendung des Klebebands.

Demgemäß betrifft die Erfindung ein Klebeband, insbesondere zur Längsummantelung von langgetrecktem Gut wie Kabelsätzen in einem Automobil, umfassend einen Träger mit einer Oberseite und einer Unterseite, wobei der Träger bezogen auf die Querrichtung eine Breite B_{T} aufweist, und mindestens eine auf der Unterseite des Trägers aufgetragene Klebemassenschicht, wobei
- auf der Klebeschicht ein zweiter Träger vorhanden ist, der eine geringere Breite B_{Schutz} aufweist als die Breite B_{T} des ersten Trägers,
- der erste Träger mit der Klebeschicht beidseitig gegenüber den Seitenkanten des zweiten Trägers übersteht, wobei der erste Überstand eine Breite von Bstart und der zweite Überstand eine Breite von B_{Hülle} aufweisen,
- der erste Träger ein Gewebe oder eine Maschenware wie beispielsweise ein Abstandsgestrick oder ein Abstandsgewirk ist und der zweite Träger ein textiler Träger ist gewählt aus der Gruppe Maschenware wie beispielsweise insbesondere ein Abstandsgestrick oder ein Abstandsgewirk, ein Doppelgewebe oder ein Vliesstoff, der nicht mit einem chemischen Bindemittel verfestigt ist, wie insbesondere ein Nadelvliesstoff und
- der erste Träger ein Flächengewicht von über 200 g/m² bis 1200 g/m² und der zweite Träger ein Flächengewicht von 200 bis 1000 g/m² aufweist.

Vorzugsweise besteht das erfindungsgemäße Klebeband im Wesentlichen aus den drei Schichten, wobei auf dem ersten oder zweiten Träger weitere, die Eigenschaften derselben optimierende Funktionsschichten vorhanden sein können. Diese Schichten sind als Bestandteil der jeweiligen Schicht definiert.

Für die einzelnen Abschnitte haben sich die folgenden Breiten als besonders vorteilhaft erwiesen: B_{Start} weist eine Breite von 3 bis 20 mm, vorzugsweise 5 bis 10 mm auf.

B_{Schutz} weist eine Breite von 50 bis 200 mm, vorzugsweise 80 bis 160 mm auf oder eine Breite von 100 bis 400 mm, vorzugsweise 160 bis 320 mm, wenn das Gut zweilagig eingeschlagen werden soll.

B_{Hülle} weist eine Breite von 50 bis 200 mm, vorzugsweise 80 bis 160 mm auf.

Die Breiten der einzelnen Abschnitte werden grundsätzlich so gewählt, dass das Klebeband sehr gut einsetzbar ist.

Der Abschnitt B_{Start} dient während des Vorgangs der Ummantelung dazu, das Klebeband leicht auf dem Gut zu fixieren, so dass ein Verrutschen während des weiteren Wickelvorganges nicht auftritt.

Der Abschnitt B_{Schutz} umhüllt das einzuschlagende Gut, also zumeist den Kabelbaum, wobei Kabelbäume mit Durchmessern von 10 mm bis zu 40 oder 50 mm umwickelt werden. Die Breite richtet sich insbesondere auch danach, ob der das Gut ein- oder zweilagig von dem zweiten Träger eingeschlagen werden soll.

Der Abschnitt B_{Hülle} dient dazu, das Klebeband sicher zu fixieren. Um eine sichere Fixierung zu gewährleisten, kann es vorteilhaft sein, wenn dieser Abschnitt so breit ist, dass das gesamte Gut ein weiteres Mal komplett eingeschlagen wird.

Der klebend ausgerüstete Gewebeträger trägt den zweiten Träger und stellt die sichere Umhüllung und den dauerhaften klebenden Verschluss der daraus resultierenden Längsbandagierung, auch Umhüllung genannt, zur Verfügung.

Um die richtige Anwendung des Klebebands insbesondere an Kabelbäumen sicherzustellen, kann zumindest eine in Längsrichtung verlaufende Kennzeichnungslinie auf der Oberseite des ersten Trägers vorhanden sein. Bevorzugt sind zwei Kennzeichnungslinien. Diese Kennzeichnungslinien unterscheiden sich optisch und/oder haptisch von der sie umgebenden Oberfläche.

Der zweite Träger soll den kompletten Umfang des Leitungssatzes schützen, ist beim Wickeln aber nicht zu erkennen, weil der erste Träger an der Außenseite des Klebebandes liegt. Durch eine erste Kennzeichnungslinie wird der Beginn des zweiten Trägers angezeigt. Nach der Umhüllung des Leitungssatzes soll das Ende des zweiten Trägers über die erste Kennzeichnungslinie (Start) hinweg erstrecken, damit eine umlaufende Schutzschicht erzeugt werden kann.

Die Position der zweiten Kennzeichnungslinie (Ende) ist der Breite des zweiten Trägers angepasst. Soll der zweite Träger eine komplette Umhüllung ergeben, so ist der Streifen nahe der Seitenkante des zweiten Trägers zu positionieren. Wenn die zweite Kennzeichnungslinie (Ende) nach der Umwicklung nicht mehr sichtbar ist, so ist ausreichend Umhüllung für den Leitungssatzdurchmesser aufgebracht worden. Wird ein im Durchmesser größer Leitungssatz mit dem Klebeband umwickelt, so bleibt die Kennzeichnungslinie (Ende) außen sichtbar. Wird ein im Durchmesser kleinerer Leitungssatz mit dem Klebeband umwickelt, so ist die Kennzeichnungslinie (Ende) nicht sichtbar, es wird allerdings mehr Klebeband verwickelt als rechnerisch notwendig. Der Schutz ist sichergestellt.

Die Markierung ist auf den Träger aufgebracht, beispielsweise durch Drucken. Alternativ oder zusätzlich kann aber auch so vorgegangen werden, dass die Markierung in den ersten Träger eingearbeitet ist. So lässt sich die Markierung als gleichsam eingewebter Kettfaden realisieren.

Die EP 3 245 265 A1 beschreibt die Verwendung einer derartigen Kennzeichnungslinie auf einem Klebeband.

Gemäß einer bevorzugten Ausführungsform der Erfindung ist also zumindest eine in Längsrichtung verlaufende Kennzeichnungsline auf der Oberseite des ersten Trägers vorhanden, vorzugsweise sind zwei Kennzeichnungslinien vorhanden, die insbesondere oberhalb der Längskanten des zweiten Trägers angeordnet sind.

Der erste Träger ist ein Gewebe oder eine Maschenware.

Besonders bevorzugte Gewebe sind wie folgt aufgebaut:
- die Fadenzahl in der Kette beträgt 10 bis 60/cm
- die Fadenzahl im Schuss beträgt 10 bis 40/cm
- die Kettfäden besitzen ein Garngewicht zwischen 40 und 1200 dtex, insbesondere zwischen 200 und 1100, weiter insbesondere zwischen 330 und 470 dtex, weiter insbesondere zwischen 420 und 470 dtex, besonders bevorzugt von 460 dtex
- die Schussfäden besitzen ein Garngewicht zwischen 40 und 1200 dtex, insbesondere zwischen 200 und 1100 dtex, insbesondere zwischen 330 und 470 dtex, weiter insbesondere zwischen 420 und 470 dtex, besonders bevorzugt von 460 dtex

Gemäß einer weiteren vorteilhaften Ausführungsform der Erfindung beträgt die Fadenzahl in der Kette 40 bis 50/cm, vorzugsweise 44/cm.

Gemäß einer weiteren vorteilhaften Ausführungsform der Erfindung beträgt die Fadenzahl im Schuss 20 bis 35/cm, vorzugsweise 25 bis 29/cm, weiter vorzugsweise 26 bis 29/cm.

Bevorzugt sind beide Merkmale in einem Gewebe gleichzeitig verwirklicht.

In einer Variante einer weiteren vorteilhaften Ausführungsform der Erfindung beträgt die Fadenzahl in der Kette 8 bis 20 /cm, vorzugsweise 14/cm, und/oder die Fadenzahl im Schuss 8 bis 30/cm , vorzugsweise 10/cm.

Gemäß einer weiteren vorteilhaften Ausführungsform der Erfindung handelt es sich bei dem Gewebe um ein Polyestergewebe, insbesondere ein Polyethylenterephthalatgewebe. Weitere Varianten können Polyamidgewebe oder Mischgewebe aus Polyester und Polyamid umfassen.

Weiter bevorzugt beträgt die Dicke des ersten Trägers maximal 600 µm, besonders bevorzugt 350 bis 550 µm.

Der erste Träger weist gemäß einer weiteren vorteilhaften Ausführungsform der Erfindung ein Flächengewicht von 70 g/m² bis 600 g/m² auf, bevorzugt 300 bis 600 g/m², weiter^{,} bevorzugt 450 bis 550 g/m².

Besonders bevorzugte Maschenwaren sind wie folgt aufgebaut:
- Wirkware, Abstandswirkware mit bevorzugt 8 bis 25 Maschenreihen/cm und 5 bis 25 Maschenstäbchen sowie 100 bis 200 Polstäbchen/cm² einem Gewicht von 70 g/m² bis 600 g/m² und Dicke von maximal 1600 µm
- Strickware, Abstandsstrickware 70 g/m² bis 600 g/m² einem Gewicht von 70 g/m² bis 600 g/m² und einer von maximal 1600 µm

Maschenstoffe sind Textilien, bei denen eine Fadenschlinge in eine andere Fadenschleife hineingeschlungen ist. Die Masche als mit anderen Schleifen verbundene Schlinge ist also die kleinste Einheit, aus der eine Wirk- oder Strickware besteht (siehe das Buch von Alfons Hofer, 1994, Stoffe - 2. Bindung Gestaltung Musterung Veredlung; Dt. Fachverlag).

Der erste Träger, dessen Oberseite nach dem Wickelung zu sehen ist, kann eine Färbung aufweisen, um das das Klebeband zu kennzeichnen:
- orange für Spannungen > 60 Volt,
- blau für Spannungen > 48 Volt und
- andere Farben, wenn dies durch gesetzliche Vorgaben bestimmt wird

Der Klebemassenauftrag, bezogen auf die Trägerfläche, liegt bevorzugt zwischen 40 und 160 g/m², vorzugsweise zwischen 60 und 130 g/m², weiter vorzugsweise zwischen 80 und 100 g/m².

Der zweite Träger ist ein textiler Träger gewählt aus der Gruppe Abstandsgestrick, Abstandsgewirk, Doppelgewebe, oder ein Vliesstoff wie ein Nadelvliesstoff. Des Weiteren umfasst die Gruppe, aus der der zweite Träger gewählt werden kann, auch Abstandsgestrick oder Abstandsgewirk.

Bevorzugt beträgt die Dicke des zweiten Trägers maximal 6000 µm, besonders bevorzugt 1000 bis 5500 µm, ganz besonders bevorzugt 3500 bis 5700 µm.

Der zweite Träger weist gemäß einer weiteren vorteilhaften Ausführungsform der Erfindung ein Flächengewicht von 350 g/m² bis 850 g/m² auf, bevorzugt 400 bis 800 g/m².

Beispielhaft sind folgende, besonders geeignete Träger mit ihren Flächengewichten und den damit verknüpften Dicken genannt:

| Material | Flächengewicht [g] | Dicke [µm] |
|---|---|---|
| Abstandsgewirk | 523 | 2430 |
| Flachstrickware I | 875 | 1475 |
| Flachstrickware II | 875 | 1680 |
| Nadelvlies | 400 | 1680 |
| Nadelvlies | 600 | 2650 |
| Nadelvlies | 800 | 3450 |

Abstandsgestricke verfügen über zwei separate gestrickte Warenflächen. Die Verbindung der beiden Maschenwarenschichten erfolgt durch separate Fäden, meistens Monofilamente, die keine Maschen bilden, sondern abwechselnd auf den Nadeln des vorderen und hinteren Nadelträgers als Henkel eingebunden werden. Durch die daraus resultierende 3D-Struktur werden die Abstandsgestricke auch 3D-Textilien genannt. Durch die besondere Konstruktion entsteht zwischen den verbundenen Warenflächen eine permanente Dämpfungszone, die ein Schlagereignis vergleichbar wie ein Stoßfänger am Automobil abfangen oder mindern kann. Solche Textilien können zum Beispiel auf Rundstrickmaschinen der Firma Mayer&Cie hergestellt werden.

Die Herstellung von Abstandsgewirken erfolgt auf Doppelraschelmaschinen mit zwei Nadelbarren in einem Arbeitsgang. Bei jeder Maschinenumdrehung erfolgt die Maschenbildung auf einer Nadelbarre gleichzeitig an allen Nadeln. Die übliche Herstellung von Abstandsgewirken kann bis zu sieben Fadensysteme an den Doppelraschelmaschinen verwenden. Durch die Vielzahl von gleichzeitig eingesetzten Fadenmaterialien ergeben sich vielfältige Konstruktionsmöglichkeiten.

Als Standardbindungen für die Erzeugung von geschlossenen Außenflächen werden Trikot-, Tuch oder Köperbindungen bevorzugt. In der Regel wird als abstandshaltender Faden ein Monofilament verwendet. Die Legung dieses abstandshaltenden Monofilfadens erfolgt zumeist kreuzförmig zwischen den textilen Deckflächen mit einem Kreuzungswinkel von annähernd 45°. Damit ist eine gute Verschiebefestigkeit der textilen Außenflächen zueinander gewährleistet und einem Kippen der Struktur unter Druckbelastung vorgebeugt. Die Dicke der hergestellten Abstandsgewirke ist durch eine entsprechende Maschineneinstellung dem Anwendungszweck entsprechend einzustellen.

Erfindungsgemäß wird weiterhin ein Vliesstoff, der nicht mit einem chemischen Bindemittel verfestigt ist, eingesetzt wie insbesondere ein Nadelvliesstoff, , wobei unter "Vlies" zumindest textile Flächengebilde gemäß EN 29092 (1988) sowie Nähwirkvliese und ähnliche Systeme zu verstehen sind. Eine chemische Verfestigung wird deswegen erfindungsgemäß ausgeschlossen, weil durch diese relativ biegestreife und feste Textilien entstehen, die sich als nicht tauglich erwiesen haben.

Als Vliesstoffe kommen besonders verfestigte Stapelfaservliese, jedoch auch Filament-, Meltblownsowie Spinnvliese in Frage, die meist zusätzlich zu verfestigen sind. Als mögliche Verfestigungsmethoden sind für Vliese die mechanische oder die thermische sowie erfindungsgemäß ausgeschlossene chemische Verfestigung bekannt.

Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische Verfahren kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben.

Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Besonders geeignet sind Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind. Die Nadeln sind zumeist jeweils 3 oder 3,5 Zoll lang und verfügen über mehrere Widerhaken. Die Stärke des Nadelschaftes orientiert sich an der Feinheit der verwendeten Fasern. Die Nadeln stechen bis zu 1000-mal in der Minute in das Vlies hinein. Dabei bewirken die Widerhaken, dass sich die leicht gekräuselten Fasern verhaken.

Die Vernadelungsdichte vorteilhaft 1 Nadel/cm² Stapelfasergelege bis 50 Nadeln/cm² Stapelfasergelege beträgt.

Im Unterschied zu den verstärkten Geweben, bei denen mehrere Fadensysteme in eine Gewebelage eingebunden werden, sind Doppelgewebe solche Gewebe, die aus zwei selbständigen übereinanderliegenden Geweben bestehen, die während des Webvorgangs fest miteinander verbunden werden. Zur Herstellung werden also zwei Kettfadensysteme und zwei Schussfadensysteme benötigt, die die beiden Gewebelagen bilden. Das Verbinden der Lagen erfolgt durch:
- Anbindung: Verbindung von Schuss des unteren und Kette des oberen Gewebes.
- Abbindung: Verbindung von Kette des unteren und Schuss des oberen Gewebes.
- Bindeschuss oder Bindekette: ein weiteres Fadensystem verbindet die beiden Gewebe als Schuss oder Kette.

In der EP 1 308 546 A1 ist ein Verfahren zum Weben eines Doppelgewebes beschrieben.

Der zweite Träger besteht insbesondere aus Polyester, insbesondere aus Polyethylenterephthalat. Weitere Varianten können Polyamid oder Mischungen aus Polyester und Polyamid sein.

Mit Polyamid für den ersten und den zweiten Träger kann ein hoher Abriebschutz erreicht werden, die Temperaturklasse erreicht aber zumeist lediglich Klasse 3.

Die Richtung des Stoffflusses in der Maschine, in der ein Gewebe, ein Vlies oder allgemein ein Stoff hergestellt wird, wird als Maschinenrichtung oder Laufrichtung bezeichnet, die Richtung im rechten Winkel hierzu dementsprechend als Querrichtung.

Um ein besonders einfaches Arbeiten für den Anwender zu ermöglichen, sind die Perforationen rechtwinklig zur Laufrichtung des Klebebands ausgerichtet und/oder in regelmäßigen Abständen angeordnet.

Besonders vorteilhaft lassen sich die Perforationen diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.

Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrein zu erzielen, beispielsweise konkav oder konvex ausgeformte Schneidkanten.

Als Ausgangsmaterialien für das Trägermaterial für die zwei Träger des Klebebands sind insbesondere (Chemie)Fasern (Stapelfaser oder Endlosfilament) aus synthetischen Polymeren, auch synthetische Fasern genannt, aus Polyester, Polyamid, Polyimid oder Aramid, vorgesehen.

Des Weiteren sind Garne, gefertigt aus den angegebenen Fasern, ebenfalls geeignet.

Bei Geweben können einzelne Fäden aus einem Mischgarn hergestellt werden. In der Regel sind die Kettfäden und die Schussfäden jedoch jeweils sortenrein ausgebildet.

Die Garne oder Fäden der Gewebe können als Filamente vorliegen. Im Sinne dieser Erfindung wird unter einem Filament ein Bündel paralleler, gerader Einzelfasern/Einzelfilamente verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen.

Das Texturieren bezeichnet allgemein einen Vorgang, bei welchem die Fäden dauerhaft gekräuselt werden. Durch die Kräuselung werden Schlingen erzeugt, welche die elastische Dehnbarkeit und auch die Abriebbeständigkeit erhöhen.

Bevorzugt wird als Material für den Träger Polyamid, besonders bevorzugt Polyester wie Polyethylenterephthalat aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Für die Klebemasse auf dem ersten Träger kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar.

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Eine Klebemasse, die sich als besonders geeignet zeigt, ist eine niedermolekulare Acrylatschmelzhaftklebemasse, wie sie unter der Bezeichnung acResin UV oder Acronal ^{®}, insbesondere acResin 260 UV, von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen werden in der EP 3 540 024 A1, der EP 2 520 627 A1, der EP 2 522 705 A1, der EP 2 520 628 A1, der EP 2 695 926 A1 und der EP 2 520 629 A1 beschrieben.

Besonders bevorzugt ist eine Haftklebemasse in Form einer getrockneten Polymerdispersion, wobei das Polymer aufgebaut ist aus:
(a) 95,0 bis 100,0 Gew.-% n-Butylacrylat und/oder 2-Ethylhexylacrylat
(b) 0,0 bis 5,0 Gew.-% eines ethylenisch ungesättigten Monomers mit einer Säure- oder Säureanhydridfunktion

Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 97,0 oder 98,0 Gew.-% bis 99,0 Gew.-% n-Butylacrylat und/oder 2-Ethylhexylacrylat und 1,0 bis 2,0 Gew.-% oder 3 Gew.-% eines ethylenisch ungesättigten Monomers mit einer Säure- oder Säureanhydridfunktion.

Neben den aufgeführten Acrylatpolymeren können der Haftklebemasse neben gegebenenfalls vorhandenen Restmonomeren zusätzlich Klebrigmacher und/oder Zuschlagstoffe wie Lichtschutz- oder Alterungsschutzmitteln zugesetzt werden.

Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt ist (Meth-)acrylsäure der Formel I, 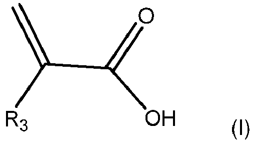 wobei R³ = H oder CH₃ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:
(a) 95,0 bis 100,0 Gew.-%, vorzugsweise 95,0 bis 99,5 Gew.-%, weiter vorzugsweise 98,0 bis 99,0 Gew.-% n-Butylacrylat und
(b) 0,0 bis 5,0 Gew.-%, vorzugsweise 0,5 bis 5,0 Gew.-%, weiter vorzugsweise 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. El-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebmasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante, bei der der Haftklebemasse keinerlei Klebharze zugesetzt sind. Für den Fachmann überraschend und nicht vorhersehbar führt das Fehlen von Klebharzen beim Klebeband nicht - wie der Fachmann erwartet hätte - zu einer unzureichenden Klebkraft. Darüber hinaus ist auch das Flaggingverhalten überraschenderweise nicht schlechter.

Insbesondere nicht zugesetzt werden der Haftklebemasse die folgenden Substanzen:
- Kohlenwasserstoffharze (zum Beispiel Polymere auf Basis ungesättigter Cs- oder C₉-Monomere)
- Terpenphenolharze
- Polyterpenharze auf Basis von Rohstoffen wie zum Beispiel α- oder β-Pinen
- aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Wegen der besonderen Eignung als Klebemasse für Klebebänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25°C), erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten. Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)-iacrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinyl¬acetat, Vinylalkoholen und/oder Vinylethern eingesetzt.

Der Restlösungsmittel-Gehalt sollte unter 1 Gew.-% beitragen.

Ebenfalls bevorzugt besteht die Klebebeschichtung aus einer Klebmasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze, die mit dem Elastomerblock der Styrolblockcopolymere verträglich sind.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Als weitere Additive können allen genannten Typen von Klebemassen Lichtschutzmittel wie zum Beispiel UV-Absorber, sterisch gehinderte Amine, Antiozonantien, Metalldesaktivatoren, Verarbeitungshilfsmittel, endblockverstärkende Harze zugesetzt werden.

Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate und Kreide, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren.

Die Klebemasse kann in Längsrichtung des Klebebands in Form eines Streifens aufgebracht sein, der eine geringere Breite aufweist als der erste Träger.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Bevorzugt ist die Klebemasse vollflächig auf dem Träger aufgetragen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleich bleibend ausgebildet ist.

Das Klebeband kann in Form einer Rolle, also in Form einer archimedischen Spirale auf sich selbst aufgerollt, hergestellt werden.

Auf der Rückseite des Klebebandes kann ein Rückseitenlack (Funktionsschicht) aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Die Umwicklung eines Kabelbaums mit dem beschriebenen Klebeband erfolgt dabei derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum.

Ebenfalls vom erfinderischen Gedanken umfasst ist ein ummanteltes langgestrecktes Gut, wie insbesondere ein Kabelsatz, ummantelt mit einem erfindungsgemäßen Klebeband, sowie ein Fahrzeug, enthaltend ein derartig ummanteltes langgestrecktes Gut.

Die aus dem erfindungsgemäßen Klebeband hergestellte Längsbandagierung kann im Vergleich zu Schläuchen und selbstverschließenden und in Längsrichtung zu öffnenden Geflechtschläuchen sehr einfach um ovale und flache Bauformen zur Anwendung gebracht werden.

Das erfindungsgemäße Klebeband kann in den bekannten und üblichen Prozessen bei der der Kabelbandagierung aufgebracht werden.

Das Klebeband ist flexibel auf unterschiedlichen Kabeldurchmessern einsetzbar.

Mittels der vorteilhaften Kennzeichnung lässt sicher und einfach die fachgerechte Anwendung des Klebebands prüfen.

Im Folgenden soll die Erfindung anhand mehrerer Figuren näher erläutert werden, ohne damit die Erfindung unnötig einschränken zu wollen.

Es zeigen
- Figur 4: das Klebeband im seitlichen Schnitt,
- Figur 5: das etwas anders gestaltete Klebeband im seitlichen Schnitt,
- Figur 6: eine weitere Variante des Klebeband im seitlichen Schnitt und
- Figur 7: einen Ausschnitt eines Kabelbaums, der sich aus einer Bündelung von einzelnen Kabeln zusammensetzt und der mit dem erfindungsgemäßen Klebeband ummantelt ist.

Das Klebeband weist gemäß Figur 4 einen ersten Träger 401 aus Gewebe mit einer Breite B_{T} auf. Auf der Oberseite des ersten Trägers 401 sind zwei Kennzeichnungslinien (Kennzeichnungslinie Start 404, Kennzeichnungslinie Ende 405) vorhanden, die oberhalb der Längskanten des zweiten Trägers 403 angeordnet sind.

Auf der Unterseite des ersten Trägers 401 ist vollflächig eine Klebemasse 402 aufgebracht. Unterhalb der Klebemasse 402 ist der zweite Träger 403 aufgebracht, der eine geringere Breite B_{Schutz} als der erste Träger 401 aufweist. Der zweite Träger 403 lässt beidseits zwei Klebemassestreifen mit der jeweiligen Breite B_{Start} und B_{Hülle} frei.

Der erste Klebemassestreifen dient zur Vorfixierung, der zweite fixiert das Klebeband nach dem Umwickeln.

Wenn die Kennzeichnungslinie Ende 405 nach dem ersten Umschlagen über der Kennzeichnungslinie 404 liegt, so dass diese gerade nicht mehr zu sehen ist, weiß der Anwender, dass der zweite Träger 403 das Gut einmal vollständig umschlungen hat (360°), das Klebeband passt also zum Durchmesser des zu ummantelnden Gutes (beziehungsweise die Breite des zweiten Trägers 403 ist auf den Umfang des zu ummantelnden Gutes optimal abgestimmt).

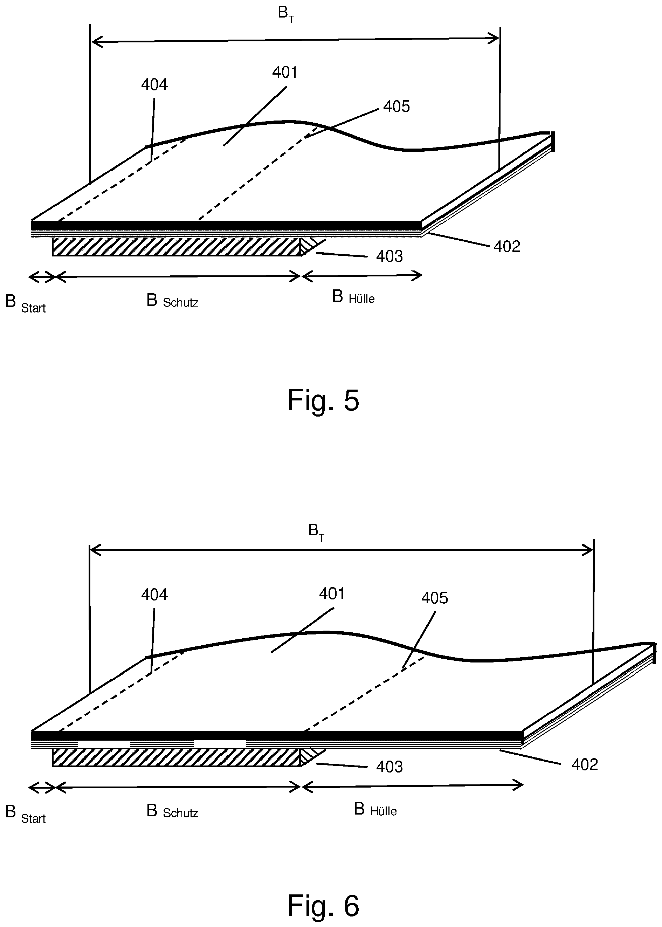

In der Figur 5 ist ein etwas anders gestaltetes Klebeband im seitlichen Schnitt gezeigt.

Die Kennzeichnungslinie Ende 405 ist zur Mitte des zweiten Trägers 403 versetzt. Das führt bei ordnungsgemäßer Wicklung dazu, dass der Kabelbaum zunächst einmal von dem zweiten Träger 403 umschlagen wird (360°). Da gleichzeitig der Abstand zwischen den zwei Kennzeichnungslinien 404, 405 der Breite B_{Hülle} entspricht, wird der Kabelbaum zuletzt noch einmal vom ersten Träger 401 umschlagen (360°). Wenn die Kennzeichnungslinie Ende 405 nach dem Umschlagen gerade nicht mehr zu sehen ist, weil diese vom Ende des ersten Trägers verdeckt wird, weiß der Anwender, dass das Klebeband optimal sitzt.

Figur 6 zeigt das Klebeband nach Figur 4, allerdings ist die Klebemasseschicht 402 nicht vollflächig auf dem ersten Träger aufgebracht, sondern weist zwei klebemassefreie Streifen auf, die sich oberhalb des zweiten Trägers 403 befinden. Dadurch wird das Klebeband flexibler.

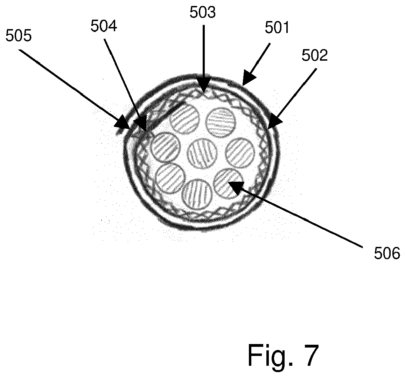

Figur 7 stellt das Klebeband in einer weiteten Ausführungsform nach dem Umwickeln von diversen Kabeln 506 dar. Die Kabel 506 sind von einer Lage zweiter Träger 503 komplett umschlungen (360°), des Weiteren umschlingt der erste Träger 501 die Kabel 506 zwecks Fixierung ein weitere volle Umdrehung (360°), so das sich eine Umhüllung ergibt, die die geforderten Eigenschaften insbesondere hinsichtlich des Fallbeiltests erfüllt.

### Beispiele

### Skizze der Beispiele

Das erfindungsgemäße Klebeband wird nachfolgend in bevorzugter Ausführung beschrieben, ohne damit die Erfindung irgendeiner Beschränkung unterwerfen zu wollen.

Des Weiteren sind Vergleichsbeispiele V aufgeführt, in dem untaugliche Klebebänder dargestellt sind.
Dichte Polyamid: 1140 g/dm³ und
Dichte PET: 1300 bis 1400 g/dm³

| | Beispiele | | |
|---|---|---|---|
| Innenlage | A | B | C |
| Materialklasse | PET | PET | PET |
| Materialtyp | Abstandsgewirk | Abstandsgewirk | Abstandsgestrick |
| Flächengewicht [g/m²] | 570 | 470 | 985 |
| Dicke [µm] | 5500 | 3200 | 1680 |

Das Abstandsgewirk A ist durch folgende weitere Parameter gekennzeichnet (siehe DIN EN 14971:2006-04):
Maschenreihe: 11 /cm
Maschenstäbchen: 7,5 / cm
Polstäbchen: 165 / cm²

Das Abstandsgewirk B ist durch folgende weitere Parameter gekennzeichnet (siehe DIN EN 14971:2006-04):
Maschenreihe: 10 /cm
Maschenstäbchen: 7,5 / cm
Polstäbchen: 150 / cm²

| | Beispiele | |
|---|---|---|
| Außenlage | D | E |
| Materialklasse | PA | PET |
| Materialtyp | Gewebe | Abstandsgestrick |
| Flächengewicht [g/m²] | 350 | 985 |
| Dicke [µm] | 550 | 1680 |

Das Abstandsgestrick ist durch folgende weitere Parameter gekennzeichnet (siehe DIN EN 14971:2006-04):
Maschenreihe: 13 / cm
Maschenstäbchen: 10,5 / cm

Die Kombination von Außenlage D mit Innenlage A führt zu einem Produkt mit der Falltestklasse / Klassifizierung E gemäß der Fallenergieklassen mit Fallwerkzeug 1 (Klassifizierung Energieklassen nach VW 60360-3).

Die Kombination von Außenlage D mit Innenlage C führt zu einem Produkt mit der Falltestklasse / Klassifizierung D (25 J) gemäß der Fallenergieklassen mit Fallwerkzeug 1 (Klassifizierung Energieklassen nach VW 60360-3).

Die Kombination von Außenlage E mit Innenlage B führt zu einem Produkt mit der Falltestklasse / Klassifizierung F gemäß der Fallenergieklassen mit Fallwerkzeug 1 (Klassifizierung Energieklassen nach VW 60360-3).

### Vergleichsbeispiele

Auf ein Polyethylenterephthalatgewebe (Feinheit der Faser 167 dtex, Fadenzahl Kette 44/cm, Fadenzahl Schuss 25/cm), Flächengewicht von 130 g/m², wird eine acrylatbasierende Beispielhaftklebemasse aufgebracht, so dass ein Klebemassenflächengewicht von 90 g/m² resultiert.

Auf die Klebemasse werden als zweiter Träger (auch textile Schutzlage genannt) verschiedene Textilien laminiert.

| | |
|---|---|
| textile Schutzlage | VA |
| Materialklasse | PET |
| Materialtyp | Vlies binder-verfestigt |
| Flächengewicht [g/m²] | 696 |
| Dicke [µm] | 550 |

Die Kombination von Außenlage Gewebe mit Innenlage VA führt zu einem Produkt mit der Falltestklasse / Klassifizierung A (5 J) gemäß der Fallenergieklassen mit Fallwerkzeug 1 (Klassifizierung Energieklassen nach VW 60360-3).

### Durchführung der Tests

Die Messungen werden - soweit nicht ausdrücklich anders erwähnt - bei einem Prüfklima von 23 ± 1 °C und 50 ± 5 % rel. Luftfeuchte durchgeführt.

### Bezugszeichenliste

- 101: Probenhalter
- 102: Stahldorn
- 103: Prüfkörper, Probe
- 104: Niederhalter, Probenfixierung
- 105: Wechselbarer Stahldraht
- 106: Auflagegewicht
- 107: Zyklische Bewegung
- 108: Antrieb

- 201: Rahmen Prüfaufbau
- 202: Aluminium Aufprallblech
- 203: Beweglicher Rundstab
- 204: Mikrofon
- 205: Prüfkörper, Probe

- 301: Rahmen Prüfaufbau
- 302: Fallgewicht
- 303: Fallwerkzeug T-Profil
- 304: Prüfkabel
- 305: Schutzumhüllung Probe

- 401: Erster Träger
- 402: Klebemasseauftrag
- 403: Zweiter Träger
- 404: Kennzeichnungslinie Start
- 405: Kennzeichnungslinie Ende

- 501: Erster Träger
- 502: Klebemasseauftrag
- 503: Zweiter Träger
- 504: Kennzeichnungslinie Start
- 505: Kennzeichnungslinie Ende
- 506: Kabel

## Patentansprüche

1. Klebeband, insbesondere zur Längsummantelung von langgetrecktem Gut wie Kabelsätzen in einem Automobil, umfassend einen Träger mit einer Oberseite und einer Unterseite, wobei der Träger bezogen auf die Querrichtung eine Breite B_{T} aufweist, und mindestens eine auf der Unterseite des Trägers aufgetragene Klebemassenschicht, wobei auf der Klebeschicht ein zweiter Träger vorhanden ist, der eine geringere Breite B_{Schutz} aufweist als die Breite B_{T} des ersten Trägers,
der erste Träger mit der Klebeschicht beidseitig gegenüber den Seitenkanten des zweiten Trägers übersteht, wobei der erste Überstand eine Breite von B_{Start} und der zweite Überstand eine Breite von B_{Hülle} aufweisen,
**dadurch gekennzeichnet, dass**
der erste Träger ein Gewebe oder eine Maschenware wie beispielsweise ein Abstandsgestrick oder ein Abstandsgewirk ist und der zweite Träger ein textiler Träger gewählt aus der Gruppe Maschenware wie beispielsweise insbesondere ein Abstandsgestrick oder ein Abstandsgewirk, Doppelgewebe oder ein Vliesstoff, der nicht mit einem chemischen Bindemittel verfestigt ist, wie insbesondere ein Nadelvliesstoff, ist und der erste Träger ein Flächengewicht von über 200 g/m² bis 1200 g/m² und der zweite Träger ein Flächengewicht von 200 bis 1000 g/m² aufweist.

2. Klebeband nach Anspruch 1,
**dadurch gekennzeichnet, dass**
zumindest eine in Längsrichtung verlaufende Kennzeichnungsline auf der Oberseite des ersten Trägers vorhanden ist, vorzugsweise, dass zwei Kennzeichnungslinien vorhanden sind, die insbesondere oberhalb der Längskanten des zweiten Trägers angeordnet sind.

3. Klebeband nach Anspruch 1 oder 2,
**dadurch gekennzeichnet, dass**
• B_{Start} eine Breite von 3 bis 20 mm, vorzugsweise 5 bis 10 mm
• B_{Schutz} eine Breite von 50 bis 200 mm, vorzugsweise 80 bis 160 mm auf oder eine Breite von 100 bis 400 mm, vorzugsweise 160 bis 320 mm, wenn das Gut zweilagig eingeschlagen werden soll, und/oder
• B_{Hülle} eine Breite von 50 bis 200 mm, vorzugsweise 80 bis 160 mm aufweist.

4. Klebeband nach zumindest einem der Ansprüche 1 bis 3,
**dadurch gekennzeichnet, dass**
das Gewebe wie folgt aufgebaut ist:
• die Fadenzahl in der Kette beträgt 10 bis 60/cm
• die Fadenzahl im Schuss beträgt 10 bis 40/cm
• die Kettfäden besitzen ein Garngewicht zwischen 40 und 1200 dtex, insbesondere zwischen 200 und 1100, weiter insbesondere zwischen 330 und 470 dtex, weiter insbesondere zwischen 420 und 470 dtex, besonders bevorzugt von 460 dtex
• die Schussfäden besitzen ein Garngewicht zwischen 40 und 1200 dtex, insbesondere zwischen 330 und 470 dtex, weiter insbesondere zwischen 420 und 470 dtex, besonders bevorzugt von 460 dtex

5. Klebeband nach zumindest einem der vorherigen Ansprüche,
**dadurch gekennzeichnet, dass**
der erste Träger eine Färbung aufweist, insbesondere orange oder blau.

6. Klebeband nach zumindest einem der vorherigen Ansprüche,
**dadurch gekennzeichnet, dass**
der Klebemassenauftrag, bezogen auf die Trägerfläche, bevorzugt zwischen 40 und 160 g/m², vorzugsweise zwischen 60 und 130 g/m², weiter vorzugsweise zwischen 80 und 100 g/m² liegt.

7. Klebeband nach zumindest einem der vorherigen Ansprüche,
**dadurch gekennzeichnet, dass**
die Dicke des zweiten Trägers maximal 6000 µm, besonders bevorzugt 1000 bis 5500 µm, ganz besonders bevorzugt 3500 bis 5700 µm beträgt und/oder der zweite Träger ein Flächengewicht von 350 g/m² bis 850 g/m², bevorzugt 400 bis 800 g/m² aufweist.

8. Klebeband nach zumindest einem der vorherigen Ansprüche,
**dadurch gekennzeichnet, dass**
als zweiter Träger ein Abstandsgewirk oder ein Abstandsgestrick verwendet wird.

9. Klebeband nach zumindest einem der vorherigen Ansprüche,
**dadurch gekennzeichnet, dass**
als Klebemasse eine acrylatbasierende Klebemasse verwendet wird.

10. Verwendung eines Klebebandes nach zumindest einem der vorherigen Ansprüche zum Ummanteln von langgestrecktem Gut wie Kabeln in einem Automobil, wobei das langgestreckte Gut in axialer Richtung von dem Klebeband umhüllt wird.

11. Langgestrecktes Gut, wie insbesondere ein Kabelsatz, ummantelt mit einem Klebeband nach zumindest einem der vorherigen Ansprüche.

12. Fahrzeug, enthaltend ummanteltes langgestrecktes Gut nach Anspruch 11.
